# EUROPÄISCHE PATENTSCHRIFT

(11) **EP 0 858 471 B1**
(45) Veröffentlichungstag und Bekanntmachung des Hinweises auf die Patenterteilung: **10.01.2001**
(21) Anmeldenummer: 96934761.6
(22) Anmeldetag: 19.10.1996
(51) Int. Cl.: C08G 59/42, C09D 163/00, C09D 5/02

(54) **WÄSSRIGE PULVERLACKDISPERSIONEN**
AQUEOUS POWDER PAINT DISPERSIONS
DISPERSIONS AQUEUSES DE PEINTURE EN POUDRE

(30) Priorität: 03.11.1995 DE 19540977
(43) Veröffentlichungstag der Anmeldung: 19.08.1998
(73) Patentinhaber: BASF Coatings Aktiengesellschaft, 48165 Münster (DE)
(72) Erfinder: SAPPER, Ekkehard, D-48346 Ostbevern (DE); WOLTERING, Joachim, D-48145 Münster (DE)
(74) Vertreter: Fitzner, Uwe, Dr.
(86) Internationale Anmeldenummer: EP9604553
(87) Internationale Veröffentlichungsnummer: WO9717390

(56) Entgegenhaltungen:
- WO-A-95/28448
- DE-A- 2 838 842
- GB-A- 1 521 354

## Beschreibung

### Gebiet der Erfindung

Die Erfindung betrifft den Einsatz von Organosilylgruppen-haltigen Di- und/oder Polycarbonsäuren als Vernetzungsmittel in wäßrigen Pulverlack-Dispersionen, die als Bindemittel Epoxydgruppen-haltige Polymerisate enthalten.

### Stand der Technik

Pulverlacke sind bekannt. Sie werden meist dort eingesetzt, wo Umweltprobleme, bedingt durch den Lösemittelgehalt der Lacke, im Vordergrund stehen.
Insbesondere bei der Beschichtung von Automobilkarosserien, bei der Beschichtung von ungeformten Metallblechen (coil coating) sowie bei der Beschichtung metallischer Verpackungsbehälter (can coating) steht eine Vermeidung hoher Lösemittelanteile in den Lacken im Vordergrund.

In DE-A-43 06 102 sind beispielsweise Pulverlacke auf Basis Carboxylgruppen-haltiger Polyester und Verbindungen mit mehr als einer Epoxydgruppe pro Molekül als Vernetzungsmittel beschrieben, die zusätzlich als Bindemittel ein oder mehrere acrylierte Polyurethanharz(e) enthalten. Solche Pulverlacke eignen sich zur Beschichtung von Metallblechen, welche nach dem Lackiervorgang verformt werden sollen, weisen bei hoher Härte gleichzeitig hohe Verformbarkeit und Flexibilität, sowie einen guten Korrosionsschutz und gute dekorative Eigenschaften, wie beispielsweise Glanz, auf.

Pulverlacke auf Basis von Carboxylgruppen-haltigen Polyestern, niedermolekularen Epoxydgruppen-haltigen Härtungsmitteln, Epoxydgruppenhaltigen Polyacrylatharzen und niedermolekularen Di- und/oder Polycarbonsäuren und/oder deren Anhydriden werden von DE-A-43 30 404 beschrieben. Diese Pulverlacke eignen sich wiederum besonders für die Beschichtung von Metallblechen, welche nach dem Lackiervorgang verformt werden sollen, wobei die Beschichtungen wiederum bei hoher Härte eine hohe Flexibilität und eine hohe Verformbarkeit ohne Rißbildung neben guten optischen Eigenschaften aufweisen.

DE-A-43 41 235 umfaßt zur Lackierung von Automobilkarosserien geeignete Pulverlacke, die als Bindemittel mindestens ein Epoxydgruppen-haltiges Polyacrylatharz enthalten, welches Siloxan-haltige Comonomerbestandteile enthält. Die in DE-A-43 41 235 beschriebenen Pulverlacke führen zu Beschichtungen, die gute Oberflächeneigenschaften, wie beispielsweise Witterungsstabilität, Chemikalienbeständigkeit, Kratzbeständigkeit und Unempfindlichkeit gegen Schmutz aufweisen.

In DE-A-42 22 194 wird ein Verfahren zur Herstellung einer zweischichtigen Lackierung und für dieses Verfahren geeignete Pulverlacke beschrieben, wobei die Pulverlacke als Bindemittel ein Epoxydgruppen-haltiges Polyacrylatharz und als Vernetzungsmittel ein Gemisch aus einem Polyanhydrid und einem Carboxylgruppen-haltigen Polyesterharz enthalten. Solche Pulverlacke werden bei der Zweischichtlackierung insbesondere von Automobilteilen als Pulverklarlack auf ein pigmentierten Basislack aufgebracht und gemeinsam mit diesem eingebrannt.

Insbesondere aus dem Grund der Lösemittelvermeidung sind in den letzten Jahren verstärkt Anstrengungen unternommen worden, für Beschichtungen unterschiedlichster Art Pulverlacke, wie sie beispielsweise oben beschrieben sind, einzusetzen. Die Ergebnisse waren jedoch oftmals nicht zufriedenstellend, weil zur Erzielung eines gleichmäßiges Aussehens im allgemeinen beim Einsatz von Pulverlacken höhere Schichtdicken notwendig sind. Desweiteren bedingt der Einsatz von pulverförmigen Lacken eine andere Applikationstechnologie, was zur Folge hat, daß die für Flüssiglacke ausgelegten Anlagen nicht mehr verwendet werden können.

Deshalb ist man bestrebt, Pulverlacke in Form wäßriger Dispersionen zu entwickeln, die sich mit Applikationstechnologien für Flüssiglacke verarbeiten lassen.
So beschreibt beispielsweise die'noch nicht publizierte deutsche Patentanmeldung P 195 23 084.1 wäßrige Pulverlackdispersionen auf der Basis von Epoxydharzen als Bindemittel und phenolischen Verbindungen und/oder Carboxylgruppen-haltigen Polyestern als Härtern für die Beschichtung von Verpackungsbehältern. Die wäßrige Pulverlackdispersion ist dabei aus einer festen pulverförmigen Komponente, enthaltend Bindemittel und Härter, und aus einer wäßrigen Komponente, enthaltend einen nicht-ionischen oder anionischen Verdicker sowie gegebenenfalls weitere dispersionsspezifische Additive, aufgebaut. Solche wäßrigen Pulverlackdispersionen lassen sich bei der Beschichtung von Verpackungsbehältern mit der bisher eingesetzten Flüssiglacktechnologie auftragen.

In der noch nicht publizierten deutschen Patentanmeldung P 195 18 392.4 wird eine wäßrige Pulverlackdispersion beansprucht, die sich insbesondere als Überzug für mit Wasserbasislack beschichtete Automobilkarosserien eignet. Dabei ist die wäßrige Pulverlackdispersion wiederum aus einer festen pulverförmigen Komponente, enthaltend wenigstens ein Epoxydgruppen-haltiges Bindemittel mit einem Gehalt von 30 bis 45 Gew-% glycidylhaltigen Monomeren und ein Vernetzungsmittel aus vorzugsweise geradkettigen, aliphatischen Dicarbonsäuren und/oder Carboxylgruppen-haltigen Polyestern, und aus einer wäßrigen Komponente, enthaltend wenigstens einen nicht-ionischen Verdicker sowie gegebenenfalls weitere dispersionsspezifische Additive, aufgebaut. Solche wäßrigen Pulverlackdispersionen lassen sich mit der bisherigen Flüssiglacktechnologie auf Automobilkarosserien auftragen und insbesondere bereits bei Temperaturen von 130 Grad C einbrennen.

### Aufgabe und Lösung

Die wäßrigen Pulverlackdispersionen gemäß den deutschen Patentanmeldungen P 195 23 084.1 und P 195 18 392.4 lassen sich bei der Beschichtung von Verpackungsbehältern bzw. von Automobilkarosserien mit den Methoden der jeweils bestehenden Flüssiglacktechnologien auftragen. Gegenüber den traditionellen in Lösemittel gelösten Zweikomponenten-Klarlacken haben solche wäßrigen Pulverlackdispersionen allerdings zum Nachteil, daß die Pulverlackdispersionen einen gegenüber den Lösemittelhaltigen Systemen schlechteren Verlauf aufweisen, bedingt durch die in der Dispersion vorliegenden festen Teilchen, die bei der Filmbildung nur schwer koaleszieren. Weiterhin besitzen die aus Pulverlackdispersionen gebildeten Lackschichten eine deutlich höhere Permeabilität für Wasserdampf, die dazu führt, daß die Schwitzwasserbeständigkeit oftmals, auch in Verbindung mit eventuell darunter liegenden Basislackschichten, deutlich verringert ist. Desweiteren ist bei den aus den Pulverlackdispersionen gebildeten Lackschichten eine geringfügig schlechte Bewitterungsstabilität festzustellen, was insbesondere für die Beschichtung von Automobilkarosserien von Bedeutung ist.
Die daraus resultierende Aufgabe, lösemittelfreie Lacksysteme auf Basis wäßriger Pulverlackdispersionen bereitzustellen, die einen guten Verlauf, eine hohe Schwitzwasserbeständigkeit sowie eine gute Witterungsstabilität neben einer hohen Chemikalienbeständigkeit, einer hohen Oberflächengüte der Beschichtung, wie Glanz und Kratzfestigkeit, und einer hohen thermischen Belastbarkeit der Beschichtung gewährleisten, wird überraschenderweise durch die im folgenden beschriebenen Pulverlackdispersionen gelöst.

Die erfindungsgemäßen wäßrigen Pulverlackdispersionen bestehen aus einer festen pulverförmigen Komponente I und einer wäßrigen Komponente II, wobei die Komponente I ein Pulverlack ist, enthaltend:
A) mindestens ein Epoxydharz mit einem Epoxydäquivalentgewicht von 300 bis 5500 g/mol (Dalton),
B) mindestens einer Di- und/oder Polycarbonsäure, enthaltend eine oder mehrere organosilylgruppen im Molekül als Härter, gegebenenfalls im Gemisch mit anderen Di- und/oder Polycarbonsäuren, die keine organosilylgruppen als Substituenten enthalten, sowie
C) gegebenenfalls Katalysatoren, Füllstoffe, Hilfsstoffe und/oder pulverlackspezifische Additive, wie Entgasungsmittel, Verlaufsmittel, Radikalfänger, Antioxidantien und/oder UV-Absorber,
und wobei die Komponente II eine wäßrige Dispersion ist, enthaltend:
D) mindestens einen nicht-ionischen Verdicker und
E) gegebenenfalls Katalysatoren, Hilfsstoffe, Entschäumungsmittel, Dispersionshilfsmittel, Netzmittel,
   vorzugsweise Carboxylgruppen-haltige Dispergiermittel, Antioxidantien, UV-Absorber, Radikalfänger, geringe Anteile an Lösemitteln, Verlaufsmittel, Biozide und/oder Wasserrückhaltemittel,

Weiterhin umfaßt die vorliegende Erfindung auch ein Verfahren zur Herstellung einer wäßrigen Pulverlackdispersion, bei dem die pulverförmigen Komponenten durch Naßvermahlung oder durch Einrühren in die wäßrige Komponente eingemischt wird.
In bevorzugten Ausführungsformen der Erfindung enthält die Komponente I der erfindungsgemäßen Pulverlackdispersion
50 bis 95 Gew.-%, bevorzugt 70 bis 85 Gew.-%, bezogen auf den Pulverlack, der Komponente A) und 5 bis 50 Gew.-%, bevorzugt 15 bis 30 Gew.-%, bezogen auf den Pulverlack, der Komponente B), sowie enthält die Komponente II der Pulverlackdispersion 0,1 bis 10 Gew.-%, bevorzugt 1 bis 3 Gew.-%, bezogen auf die Pulverlackdispersion, der Komponente D).

### Durchführung der Erfindung

### Die Komponenten der wäßrigen Pulverlackdispersion

Die als Komponente A) eingesetzten Epoxydharze sind feste Epoxydharze mit einem Epoxydäquivalentgewicht von 300 bis 550 g/mol (Dalton),

Als Komponente A) geeignet sind aromatische, aliphatische und/oder cycloaliphatische Epoxydharze, wobei beispielsweise aromatische Epoxydharze auf Basis Bisphenol-A und/oder Bisphenol-F und/oder Epoxydharze von NovolakTyp eingesetzt werden können, Solche Epoxydharze auf Basis Bisphenol-A oder Bisphenol-F weisen im allgemeinen Epoxydäquivalentgewichte zwischen 500 und 200 g/mol (Dalton) auf. Epoxydharze vom Novolak-Typ weisen beispielsweise Epoxydäquivalentgewichte von 500 bis 1006 g/mol (Dalton) auf, Epoxydharze vom Bisphenol-A- bzw. vom Bisphenol-F-Typ weisen im allgemeinen eine Funktionalität von maximal 2 auf und Epoxydharze vom Novolak-Typ eine Funktionalität von mindestens 2 auf, Jedoch können auch Epoxydharze auf Basis von Bisphenol-A bzw. Bisphenol-F durch Verzweigung, beispielsweise mittels Trimethylolpropan, Glycerin, Pentaerythrit oder anderer Verzweigungreagenzien, auf eine Funktionalität von größer 2 gebracht werden, Selbstverständlich können auch andere Epoxydharze, wie beispielsweise Alkylenglykolglycidylether oder deren verzweigte Folgeprodukte, oder mit Alkylenglykolen flexibilisierte Epoxydharze auf Basis Bisphenol-A oder Bisphenol-F, eingesetzt werden, Ferner sind auch Mischungen verschiedener der genannten Epoxydharze geeignet.
Geeignete Epoxydharze sind beispielsweise die unter folgenden Namen im Handel erhältlichen Produkte: Epikote® 154, 1001, 1002, 1004, 1007, 1009, 1055, 3003-4F-10 der Firma Shell Chemie, XZ 86 795 sowie DER® 662, 664, 667, 669, 642U und 672U der Firma Dow sowie Araldit® GT 6064, GT 7004, GT 7072, GT 7097, GT 7203, GT 7220 und GT 7304 der Firma Ciba-Geigy.
Für Beschichtungen mit den erfindungsgemäßen Pulverlackdispersionen im Verpackungsbereich besonders bevorzugt sind FDA-zugelassene Epoxydharze.
Für Beschichtungen im Automobilbereich bevorzugt als Komponente A) eingesetzte Epoxydharze sind beispielsweise Epoxydgruppen-haltige Polyacrylatharze geeignet, die durch Copolymerisation von mindestens einem ethylenisch ungesättigten Monomeren, das mindestens eine Epoxydgruppe im Molekül enthält, mit mindestens einem weiteren ethylenisch ungesättigten Monomeren, das keine Epoxydgruppe im Molekül enthält, herstellbar sind, wobei mindestens eines der Monomeren ein Ester der Acryl- und/oder der Methacrylsäure ist. Derartige Epoxydgruppen-haltige Polyacrylatharze sind beispielsweise in EP-A-0 299 420, DE-B-22 14 650, DE-B-27 49 576, US-Patent 4,091,048 und US-Patent 3,781,379 beschrieben. Als Beispiele für ethylenisch ungesättigte Monomere, die keine Epoxydgruppe im Molekül enthalten, seien Alkylester der Acryl- und der Methacrylsäure, die 1 bis 20 Kohlenstoffatome im Esterrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt, Weitere Beispiele für ethylenisch ungesättigte Monomere, die keine Epoxydgruppen im Molekül enthalten, sind: Säureamide, wie beispielsweise Acrylsäure- und Methacrylsäureamid, vinylaromatische Verbindungen, wie Styrol, alpha-Methylstyrol und Vinyltoluol, Nitrile, wie Acryl- und Methacrylnitril, Vinyl- und Vinylidenhalogenide, wie Vinylchlorid und Vinylidenfluorid, Vinylester, wie Vinylacetat, sowie hydroxylgruppenhaltige Monomere, wie beispielsweise Hydroxyethylacrylat und Hydroxyethylmethacrylat,

Das Epoxydgruppen-haltige Polyacrylatharz weist üblicherweise ein Epoxydäquivalentgewicht von 400 bis 2500 g/mol (Dalton) vorzugsweise von 400 bis 1000 g/mol (Dalton), ein zahlenmittleres Molekulargewicht (Bestimmung per Gelpermeationschromatographie mit Polystyrolstandard) von 2000 bis 20,000 g/mol(Dalton). vorzugsweise von 3000 bis 10,000 g/mol (Dalton) und eine Glasübergangstemperatur Tg von 30 bis 80 Grad C, bevorzugt von 40 bis 70 Grad C, besonders bevorzugt von 40 bis 60 Grad C (gemessen mit Hilfe der differential scanning calorimetry DSC) auf, Ganz besonders bevorzugt werden Glasübergangstemperaturen Tg von ungefähr 50 Grad C. Dabei können auch Gemische aus zwei oder mehr Polyacrylatharzen zum Einsatz kommen.

Das Epoxydgruppen-haltige Polyacrylatharz kann durch Polymerisation nach allgemein gut bekannten Methoden hergestellt werden.

Als Härterkomponente B) geeignet sind Di- und/oder Polycarbonsäuren mit mindestens einer Organosilylgruppe im Molekül, wobei die Di- und/oder Polycarbonsäuren bei der Vermischung mit dem Epoxydharz wie das Epoxydharz selbst vorzugsweise in festem Aggregatzustand vorliegt. Besonders bevorzugt werden als Härterkomponente B) aromatische Dicarbonsäuren mit Organosilylgruppen eingesetzt, wie Derivate der Phthalsäure und ganz besonders bevorzugt der Terephthalsäure. Beispielhaft für Organosilylgruppen-haltige Terephthalsäurederivate seien genannt: 2-Trimethylsilyl-terephthalsäure, 2-Dimethylphenylsilyl-terephthalsäure, 2-Diphenylmethylsilylterephthalsäure, Triphenylsilyl-terephthalsäure, 2,5-Bis(trimethylsilyl)-terephthalsäure, 2,5-Bis(dimethylphenylsilyl)-terephthalsäure, 2,5-Bis(diphenylmethylsilyl)-terephthalsäure sowie 2,5-Bis(triphenylsilyl)-terephthalsäure.
In einer weiteren Ausführungsform der Erfindung liegen die mit mindestens einer Organosilylgruppe substituierten Di- und/oder Polycarbonsäuren im Gemisch mit weiteren niedermolekularen Di- und/oder Polycarbonsäuren B1), die keine Organosilylgruppen als Substituenten aufweisen, vor Besonders bevorzugt als niedermolekulare Di- und/oder Polycarbonsäuren B1) sind gesättigte, geradkettige, aliphatische Dicarbonsäuren mit 3 bis 20 Kohlenstoffatomen im Molekül geeignet. Ganz besonders bevorzugt als Komponente B1) wird Decan-1,12-dicarbonsäure eingesetzt. Zur Modifizierung der Eigenschaften der fertigen Beschichtungen können gegebenenfalls noch andere Carboxylgruppen-haltige Härter eingesetzt werden. Als Beispiele hierfür seien gesättigte, verzweigte oder ungesättigte, geradkettige Di- und/oder Polycarbonsäuren sowie Polymere mit Carboxylgruppen genannt.

Die Epoxydharzkomponente A) wird in der festen pulverförmigen Komponente I der erfindungsgemäßen Pulverlackdispersion üblicherweise in einer Menge von 50 bis 95 Gew.-%, bevorzugt von 70 bis 85 Gew.-%, bezogen auf den Pulverlack I, eingesetzt.
Die Härterkomponente B) wird in der festen pulverförmigen Komponente I der erfindungsgemäßen Pulverlackdispersion üblicherweise in einer Menge von 5 bis 50 Gew.-%, bevorzugt von 15 bis 30 Gew.-%, bezogen auf den Pulverlack I, eingesetzt.

Die feste pulverförmige Komponente I enthält gegebenenfalls einen oder mehrere geeignete Katalysatoren für die Epoxydharz-Aushärtung, üblicherweise in Anteilen von 0,001 bis 5 Gew.-%, bevorzugt von 0,01 bis 2 Gew.-%, bezogen auf I. Geeignete Katalysatoren sind beispielsweise Phosphoniumsalze organischer oder anorganischer Säuren, wie Ethyltriphenylphosphoniumchlorid, Ethyltriphenylphosphoniumiodid, Ethyltriphenylphosphoniumcyanat, Ethyltriphenylphosphomium-Acetat-Essigsäurekomplex, Tetrabutylphosphoniumiodid, Tetrabutylphosphoniumbromid, Tetrabutylphosphonium-Acetat-Essigsäurekomplex sowie weitere geeignete Phosphoniumsalze, wie beispielsweise in US-PS 3,477,990 und US-PS 3,342,580 beschrieben, Cholinderivate, wie beispielsweise in EP-B-0 010 805 beschrieben, Imidazol oder Imidazolderivate, wie 2-Methylimidazol, 2-Styrylimidazol, 2-Butylimidazol oder 1-Benzyl-2-methylimidazol sowie weitere Imidazolderivate, wie beispielsweise in BE-B-756 693 beschrieben, Amine, wie primäre, sekundäre oder tertiäre Aminophenole, quaternäre Ammoniumverbindungen, Aluminiumacetylacetonat, Toluolsulfonsäuresalze oder Mischung der vorstehend genannten Verbindungen.

Weiterhin kann die pulverförmige Komponente I noch 0 bis 55 Gew.-%, bevorzugt 15 bis 25 Gew.-%, bezogen auf I, Füllstoffe enthalten. Im allgemeinen werden anorganische Füllstoffe, beispielsweise Titandioxid, wie z.B. Kronos ® 2160 der Firma Kronos Titan, Rutil® 902 der Firma DuPont und RC 566 der Firma Sachtleben, Bariumsulfat und Füllstoffe auf Silikat-Basis, wie beispielsweise Talkum, Kaolin, Magnesium-Aluminium-Silikate oder Glimmer, eingesetzt. Bevorzugt werden Titandioxid und Füllstoffe vom Quarzsand-Typ verwendet.

Außerdem kann die feste pulverförmige Komponente I noch 0,01 bis 10 Gew.-%, bevorzugt 0,1 bis 2 Gew.-%, bezogen auf I, andere Hilfsmittel und Additive enthalten, wie beispielsweise Verlaufsmittel, Antioxidantien, UV-Absorber, Radikalfänger, Rieselhilfen und Entgasungsmittel, wie beispielsweise Benzoin.
Als Verlaufsmittel geeignet sind Polyacrylate, Polysiloxane und/oder fluorhaltige Verbindungen.
Einsetzbare Antioxidantien sind Reduktionsmittel, wie beispielsweise Hydrazide und Phosphorverbindungen, sowie Radikalfänger, wie bespielsweise 2,6-Di-tert.-butylphenol oder dessen Derivate sowie 2,2,6,6-Tetramethylpiperidin oder dessen Derivate.
Als UV-Absorber bevorzugt sind Triazine oder Benzotriazole.

Die wäßrige Komponente II enthält den nicht-ionischen Verdicker D), der beispielsweise auf Basis Polyurethan, Polyacrylat oder modifizierter Cellulose sein kann. Weiterhin kann die Komponente II Katalysatoren, Verlaufsmittel, Antioxidantien, UV-Absorber, Radikalfänger und Netzmittel enthalten, wobei im wesentlichen die schon bei der Komponente I aufgezählten Verbindungen in Betracht kommen.

Ferner können der Komponente II noch Hilfsstoffe, Entschäumungsmittel, Dispersionshilfsmittel, Biozide sowie Lösungs- und Neutralisationsmittel zugesetzt sein, wobei als Entschäumungsmittel bevorzugt modifizierte Polysiloxane, als Dispersionshilfsmittel beispielsweise Ammonium- oder Metallsalze von Polycarboxylaten sowie als Neutralisationsmittel beispielsweise Amine, Ammoniak oder Metallhydroxide in Betracht kommen.

### Die Herstellung der wäßrigen Pulverlackdispersion

Die Herstellung der festen pulverförmigen Komponente I erfolgt nach bekannten Methoden (vergleiche beispielsweise: Produktinformation der Firma BASF Lacke + Farben AG, "Pulverlacke", 1990) durch Homogenisieren und Dispergieren der Komponenten A), B) und gegebenenfalls C), beispielsweise mittels eines Extruders, Schneckenkneters und ähnlicher Aggregate. Nach der Herstellung der Komponente I wird diese durch Vermahlen und gegebenenfalls durch Sichten und Sieben für die Dispergierung vorbereitet.
Aus der pulverförmigen festen Komponente I kann anschließend mit der wäßrigen Komponente II durch Naßvermahlen oder durch Einrühren von trocken vermahlener Komponente I in die Komponente II die erfindungsgemäße Pulverlackdispersion hergestellt werden. Besonders bevorzugt wird die Naßvermahlung.

Die vorliegende Erfindung betrifft demgemäß auch ein Verfahren zur Herstellung einer wäßrigen Pulverlackdispersion, bei dem eine wäßrige Dispersion aus einer festen, pulverförmigen Komponente I und einer wäßrigen Komponente II hergestellt wird, wobei die Komponente I ein Pulverlack ist, enthaltend:
A) mindestens ein Epoxydharz mit einem Epoxydäquivalentgewicht von 300 bis 5500 g/mol (Dalton),
B) mindestens einer Di- und/oder Polycarbonsäure, enthaltend eine oder mehrere Organosilylgruppen im Molekül als Härter, gegebenenfalls im Gemisch mit anderen Di- und/oder Polycarbonsäuren, die keine organosilylgruppen als Substituenten enthalten,
sowie
C) gegebenenfalls Katalysatoren, Füllstoffe, Hilfsstoffe und/oder pulverlackspezifische Additive, wie Entgasungsmittel, Verlaufsmittel, Radikalfänger, Antioxidantien und/oder UV-Absorber
und wobei die Komponente II eine wäßrige Dispersion ist, enthaltend:
D) mindestens einen nicht-ionischen Verdicker und
E) gegebenenfalls Katalysatoren, Hilfsstoffe, Entschäumungsmittel, Dispersionshilfsmittel, Netzmittel, vorzugsweise Carboxylgruppen-haltige Dispergiermittel, Antioxidantien, UV-Absorber, Radikalfänger, geringe Anteile an Lösemitteln, Verlaufsmittel, Biozide und/oder Wasserrückhaltemittel
   - die aus den Komponenten I und II hergestellte Dispersion auf eine Viskosität von 10 bis 1000 mPas, vorzugsweise 50 bis 300 mPas, bei einem Schergefälle von 500 s-1 und auf einen Festkörpergehalt von 10 bis 50 %, vorzugsweise von 20 bis 40 % eingestellt wird,
   - die aus den Komponenten I und II hergestellte Dispersion unter Einhaltung einer Temperatur von 0 bis 60 Grad C, vorzugsweise zwischen 5 und 35 Grad C, vermahlen wird und
   - der pH-Wert der Dispersion auf 4 bis 10, vorzugsweise auf 5 bis 9 eingestellt wird.

Die mittlere Korngröße liegt zwischen 1 und 25 Mikrometer, vorzugsweise unter 20 Mikrometer, besonders bevorzugt zwischen 2 und 12 Mikrometer. Die Glastemperatur des Pulverlacks beträgt 20 bis 90 Grad C, vorzugsweise 30 bis 70 Grad C.

Der Dispersion können vor oder nach der Naßvermahlung bzw. dem Eintragen des trockenen Pulverlacks I in die wäßrige Komponente II 0 bis 5 Gew.-%, bezogen auf die Dispersion, eines Gemischs aus einem Entschäumer, einem Ammonium- und/oder Alkalisalz, einem nicht-ionischen Dispergierhilfsmittel, einem Netzmittel und/oder einem Verdicker sowie anderer Additive zugesetzt werden. Vorzugsweise werden zunächst Entschäumer, Dispergierhilfsmittel, Verdickungsmittel und Netzmittel in Wasser dispergiert. Danach werden kleine Portionen des trockenen Pulverlacks I eingerührt. Anschließend werden nochmals Entschäumer, Dispergierhilfsmittel, Verdickungsmittel und Netzmittel eindispergiert, wonach abermals der trockene Pulverlack I eingerührt wird.

Die Einstellung des pH-Werts erfolgt erfindungsgemäß vorzugsweise mit Ammoniak oder mit Aminen. Der pH-Wert kann hierbei zunächst solchermaßen ansteigen, daß eine stark basische Dispersion entsteht. Der pH-Wert fällt jedoch innerhalb mehrerer Stunden oder Tage auf die oben angeführten Werte von 4 bis 10, vorzugsweise 5 bis 9.

### Anwendungen der erfindungsgemäßen wäßrigen Pulverlackdispersionen

Die erfindungsgemäße Pulverlackdispersion läßt sich insbesondere in Form eines Klarlacks als Überzug von Basislacken, vorzugsweise in der Automobilindustrie verwenden. Besonders geeignet ist eine solche Klarlackdispersion für Wasserbasislacke auf Basis eines Polyesterharzes, Polyurethanharzes und eines Aminoplastharzes. Die erfindungsgemäßen Pulverlackdispersionen lassen sich mit den aus der Flüssiglacktechnologie bekannten Methoden aufbringen. Insbesondere können sie mittels Spritzverfahren aufgebracht werden. Ebenso kommen elektrostatisch unterstützte Hochrotation oder pneumatische Applikation in Betracht.
Die auf die Basislackschicht aufgebrachten Pulverlackdispersionen werden regelmäßig vor dem Einbrennen abgelüftet. Dies geschieht zweckmäßigerweise zunächst bei Raumtemperatur und anschließend bei leicht erhöhter Temperatur. In der Regel beträgt die erhöhte Temperatur 40 bis 70 Grad C, vorzugsweise 50 bis 65 Grad C. Das Ablüften wird während 2 bis 10 Minuten, vorzugsweise während 4 bis 8 Minuten, bei Raumtemperatur durchgeführt und danach nochmals während der gleichen Zeitspanne bei erhöhter Temperatur.
Das Einbrennen kann bereits bei Temperaturen von 130 bis 180 Grad C, vorzugsweise bei 135 bis 155 Grad C durchgeführt werden.
Mit den erfindungsgemäßen Pulverlackdispersionen können beispielsweise Schichtdicken von 20 bis 100 Mikrometer, vorzugsweise zwischen 30 und 70 Mikrometer realisiert werden. Klarlacke auf Basis von Pulverlacken mit vergleichbarer Qualität konnten nach dem bisherigen Stand der Technik nur durch Auftrag von 65 bis 80 Mikrometer Schichtdicke realisiert werden.

Desweiteren läßt sich die erfindungsgemäße Pulverlackdispersion beispielsweise als Überzug von Verpackungsbehältern, die aus den unterschiedlichsten Materialien bestehen können sowie die unterschiedlichsten Größen und Formen aufweisen können, verwenden. Beispielsweise werden mit den erfindungsgemäßen Pulverlackdispersionen metallische Behälter beschichtet. Diese Metallbehälter können dadurch hergestellt worden sein, daß zunächst Metallblech gerollt und dann durch Umkanten verbunden wurde. An den so entstandenen Zylindern können danach die Endstücke befestigt werden. Die erfindungsgemäßen Pulverlacke werden sowohl für die Abdeckung der Schweißnaht als auch für die Innenbeschichtung der Behälter, die im allgemeinen bereits einen Boden besitzen, eingesetzt. Ferner können auch tiefgezogene Metallbehälter innen mit den erfindungsgemäßen Pulverlackdispersionen beschichtet werden. Selbstverständlich sind die Pulverlackdispersionen aber auch für die Beschichtung von Behälterdeckeln und -böden geeignet.
Die Verpackungsbehälter können aus den unterschiedlichsten Materialien bestehen, wie beispielsweise Aluminium, Schwarzblech, Weißblech und verschiedenen Eisenlegierungen, die gegebenenfalls mit einer Passivierungsschicht auf der Basis von Nickel-, Chrom- oder Zinnverbindungen versehen ist.
Die Applikation der Pulverlackdispersion erfolgt nach bekannten Methoden, wie sie bei Flüssiglacken eingesetzt werden und wie sie beispielhaft oben beschrieben sind.

Im folgenden Beispiel wird die Herstellung einer Pulverlackdispersion schematisch dargestellt.

### Beispiel: Herstellung der erfindungsgemäßen Pulverlackdispersion

Der Herstellprozeß läuft wie folgt ab:
1. Einwaage der Komponenten I und II:
   In einem Behälter mit Dissolvereinrichtung wird als flüssige Komponente II VE-Wasser, Verdicker, Netzmittel und Dispergiermittel vorgelegt. Nach Zugabe der pulverförmigen Komponente I wird der Ansatz bei einer Scheibenumfangsgeschwindigkeit von 20 m/s während 20 Minuten homogenisiert.
2. Vorspülen der Rührwerkskugelmühle:
   Vor Beginn der Naßvermahlung wird die Mühle mit einem Gemisch aus VE-Wasser und der im Produkt enthaltenen Additive solange gespült, bis die Maschine frei von anderen Lösemitteln ist.
3. Naßvermahlung:
   Der in Stufe 1. hergestellte Produktansatz wird mit Hilfe der Rührwerkskugelmühle vermahlen. Dazu wird das Produkt mit einer Pumpe der Mühle zugeführt und solange im Kreis in der Mühle gefahren, bis die gewünschte Endqualität Teilchengrößenverteilung) bei einer eingetragenen spezifischen Energie von etwa 60 Wh/kg erreicht wird. Die maximal erreichte Temperatur liegt unter 25 Grad C.
4. Komplettierung der Pulverlackdispersion:
   Nach der Naßvermahlung wird die Pulverlackdispersion komplettiert. Dazu werden noch weitere geringe Mengen an Additiven (Verdicker, Netzmittel, Neutralisationsmittel) unter Rühren zugegeben.
5. Filtration:
   Die Pulverlackdispersion wird zunächst mit Beutelfiltern (PONG 50) im Kreis filtriert. Anschließend erfolgt die Filtration in einer Passage über denselben Beutelfilter in einen sauberen Behälter.
   Danach wird die Pulverlackdispersion abgefüllt.

## Patentansprüche

1. Wäßrige Pulverlackdispersion auf der Basis von Epoxydharzen,
dadurch gekennzeichnet, daß sie aus einer festen, pulverförmigen Komponente I und einer wäßrigen Komponente II bestehen, wobei die Komponente I ein Pulverlack ist, enthaltend:
A) mindestens ein Epoxydharz mit einem Epoxydäquivalentgewicht von 300 bis 5500 g/mol (Dalton),
B) mindestens einer Di- und/oder Polycarbonsäure als Härter, enthaltend eine oder mehrere organosilylgruppen im Molekül, gegebenenfalls im Gemisch mit weiteren Di- und/oder Polycarbonsäuren B1), die keine organosilylgruppen als Substituenten tragen, sowie
C) gegebenenfalls Katalysatoren, Füllstoffe, Hilfsstoffe und/oder pulverlackspezifische Additive, wie Entgasungsmittel, Verlaufsmittel, Radikalfänger, Antioxidantien und/oder UV-Absorber,
und wobei die Komponente II eine wäßrige Dispersion ist, enthaltend:
D) mindestens einen nicht-ionischen Verdicker und
E) gegebenenfalls Katalysatoren, Hilfsstoffe, Entschäumungsmittel, Dispersionshilfsmittel, Netzmittel, vorzugsweise Carboxylgruppen-haltige Dispergiermittel, Antioxidantien, UV-Absorber, Radikalfänger, geringe Anteile an Lösemitteln, Verlaufsmittel, Biozide und/oder Wasserrückhaltemittel,

2. Wäßrige Pulverlackdispersion nach Anspruch 1, dadurch gekennzeichnet, daß die Komponente I, jeweils bezogen auf enthält:
50 bis 95 Gew.-% der Komponente A),
5 bis 50 Gew.-% der Komponente B) und
0 bis 10 Gew.-% der Komponente C)
sowie daß die Komponente II, bezogen auf : die Pulverlackdispersion, enthält:
0,1 bis 10 Gew.-% der Komponente D).

3. Wäßrige Pulverlackdispersion nach einem der Ansprüche 1 oder 2,
dadurch gekennzeichnet, daß die Komponente A) Epoxydharze auf Basis Bisphenol-A und/oder Bisphenol-F, vorzugsweise mit einem Epoxydäquivalentgewicht von 500 bis 2000 g/mol (Dalton), und/oder Epoxydharze vom Novolak-Typ, vorzugsweise mit einem Epoxydäquivalentgewicht von 500 bis 1000 g/mol (Dalton), enthält.

4. Wäßrige Pulverlackdispersion nach einem der Ansprüche 1 oder 2,
dadurch gekennzeichnet, daß die Komponente A) Epoxydgruppen-haltige Polyacrylate enthält, die durch Copolymerisation von mindestens einem ethylenisch ungesättigten Monomeren, das mindestens eine Epoxydgruppe im Molekül enthält, mit mindestens einem weiteren Monomeren, das keine Epoxydgruppe im Molekül enthält, hergestellt werden, wobei mindestens eines der Monomeren ein Ester der Acryl- und/oder Methacrylsäure ist.

5. Wäßrige Pulverlackdispersion nach einem der Ansprüche 1 bis 4,
dadurch gekennzeichnet, daß die Komponente B) aromatische Di- und/oder Polycarbonsäuren mit mindestens einer Organosilylgruppe im Molekül enthält.

6. Wäßrige Pulverlackdispersion nach einem der Ansprüche 1 bis 5,
dadurch gekennzeichnet,daß die Komponente D) ein nicht-ionischer Verdicker auf der Basis Polyurethan, Polyacrylat und/oder modifizierter Cellulose ist.

7. Verfahren zur Herstellung wäßriger Pulverlackispersionen nach einem der Ansprüche 1 bis 6,
dadurch gekennzeichnet, daß die aus den Komponenten I und II hergestellte Pulverlackdispersion auf eine Viskosität von 10 bis 1000 mPas, vorzugsweise von 50 bis 300 mPas, bei einem Schergefälle von 500 s⁻¹, und auf einen Festkörpergehalt von 10 bis 50 %, vorzugsweise 20 bis 40 %, eingestellt wird.

8. Verfahren zur Herstellung wäßriger Pulverlackdispersionen nach Anspruch 7,
dadurch gekennzeichnet, daß die aus den Komponenten I und II hergestellte Pulverlackdispersion unter Einhaltung einer Temperatur von 0 bis 60 Grad C, vorzugsweise von 5 bis 35 Grad C vermahlen wird.

9. Verfahren zur Herstellung wäßriger Pulverlackdispersionen nach einem der Ansprüche 7 oder 8,
dadurch gekennzeichnet, daß die aus den Komponenten I und II hergestellte Pulverlackdispersion auf einen pH-Wert von 4 bis 10, vorzugsweise von 5 bis 9, eingestellt wird.

10. Verfahren zur Herstellung wäßriger Pulverlackdispersionen nach einem der Ansprüche 7 bis 9,
dadurch gekennzeichnet, daß die mittlere Korngröße der Dispersionsteilchen auf höchstens 20 Mikrometer, vorzugsweise auf 2 bis 12 Mikrometer, eingestellt wird.

11. Verwendung der wäßrigen Pulverlackdispersionen nach einem der Ansprüche 1 bis 10 in Form eines Klarlacks als Überzug von Basislacken, vorzugsweise in der Automobilindustrie.

12. Verwendung der wäßrigen Pulverlackdispersionen nach einem der Ansprüche I bis 10 als Überzugsmittel für Verpackungsbehälter, die aus den unterschiedlichsten Materialien bestehen können und die unterschiedlichsten Formen und Größen aufweisen können.

## Claims

1. Aqueous powder coating dispersion based on epoxy resins, characterized in that they [sic] consist of a solid, pulverulent component I and an aqueous component II, component I being a powder coating comprising:
A) at least one epoxy resin having an epoxide equivalent weight of from 300 to 5500 g/mol (daltons),
B) at least one di- and/or polycarboxylic acid as curing agent, comprising one or more organosilyl groups in the molecule, if desired in a mixture with other di- and/or polycarboxylic acids B1) which contain no organosilyl group as substituent, and
C) if desired, catalysts, fillers, auxiliaries and/or additives specific to powder coating, such as degassing agents, leveling agents, free-radical scavengers, antioxidants and/or UV absorbers,
and component II being an aqueous dispersion comprising:
D) at least one nonionic thickener and
E) if desired, catalysts, auxiliaries, defoaming agents, dispersion auxiliaries, wetting agents, preferably carboxyl-containing dispersants, antioxidants, UV absorbers, free-radical scavengers, small quantities of solvents, leveling agents, biocides and/or water-retention agents.

2. Aqueous powder coating dispersion according to claim 1, characterized in that component I comprises, based in each case on I:
from 50 to 95 % by weight of component A),
from 5 to 50 % by weight of component B) and
from 0 to 10 % by weight of component C),
and in that component II comprises, based on the powder coating dispersion:
from 0.1 to 10 % by weight of component D).

3. Aqueous powder coating dispersion according to one of claims 1 or 2, characterized in that component
A) comprises epoxy resins based on bisphenol A and/or bisphenol F, preferably having an epoxide equivalent weight of 500 to 2000 g/mol (daltons), and/or epoxy resins of the novolak type, preferably having an epoxide equivalent weight of from 500 to 1000 g/mol (daltons).

4. Aqueous powder coating dispersion according to one of claims 1 or 2, characterized in that component
A) comprises polyacrylates which contain epoxide groups and are prepared by copolymerizing at least one ethylenically unsaturated monomer which contains at least one epoxide group in the molecule with at least one further monomer containing no epoxide group in the molecule, at least one of the monomers being an ester of acrylic and/or methacrylic acid.

5. Aqueous powder coating dispersion according to one of claims I to 4, characterized in that component B) comprises aromatic di- and/or polycarboxylic acids having at least one organosilyl group in the molecule.

6. Aqueous powder coating dispersion according to one of claims 1 to 5, characterized in that component D) is a nonionic thickener based on polyurethane, polyacrylate and/or modified cellulose.

7. Process for the preparation of aqueous powder coating dispersions according to one of claims 1 to 6, characterized in that the powder coating dispersion prepared from components I and II is adjusted to a viscosity of from 10 to 1000 mPas, preferably from 50 to 300 mPas, at a shear gradient of 500 s⁻¹, and to a solids content of from 10 to 50 %, preferably 20 to 40 %.

8. Process for the preparation of aqueous powder coating dispersions according to claim 7, characterized in that the powder coating dispersion prepared from components I and II is milled while maintaining a temperature of from 0 to 60 degrees C, preferably from 5 to 35 degrees C.

9. Process for the preparation of aqueous powder coating dispersions according to one of claims 7 or 8, characterized in that the powder coating dispersion prepared from components I and II is adjusted to a pH of from 4 to 10, preferably from 5 to 9.

10. Process for the preparation of aqueous powder coating dispersions according to one of claims 7 to 9, characterized in that the mean particle size of the dispersion particles is adjusted to not more than 20 micrometers, preferably from 2 to 12 micrometers.

11. Use of the aqueous powder coating dispersions according to one of claims 1 to 10 in the form of a clearcoat as a coating over basecoats, preferably in the automotive industry.

12. Use of the aqueous powder coating dispersions according to one of claims 1 to 10 as coating compositions for packaging containers which may consist of a very wide variety of materials and may have a very wide variety of shapes and sizes.

## Revendications

1. Dispersion aqueuse de peinture pulvérulente à base de résines époxy, caractérisée en ce qu'elle est composée d'un composant solide pulvérulent I et d'un composant aqueux II, le composant I étant une peinture pulvérulente comprenant :
A) au moins _une résine époxy ayant un poids équivalent d'époxyde de 300- à 5500 g/mol (daltons),
B) au moins un acide dicarboxylique et/ou polycarboxylique en tant qu'agent durcissant, comprenant un ou plusieurs groupes organosilyle dans la molécule, éventuellement en mélange avec d'autres acides dicarboxyliques et/ou polycarboxyliques B1) ne renfermant pas de groupes organosilyle en tant que substituants, et
C) éventuellement des catalyseurs, des charges, des auxiliaires et/ou des additifs spécifiques aux peintures pulvérulentes, tels que des agents de dégazage, des agents d'égalisation, des capteurs de radicaux, des antioxydants et/ou des agents absorbant les UV,
et le composant II étant une dispersion aqueuse comprenant :
D) au moins un épaississant non ionique et
E) éventuellement des catalyseurs, des auxiliaires, des antimousses, des auxiliaires de dispersion, des agents mouillants, de préférence des agents dispersants renfermant des groupes carboxy, des antioxydants, des agents absorbant les UV, des capteurs de radicaux, de faibles proportions de solvants, des agents d'égalisation, des biocides et/ou des agents de rétention d'eau.

2. Dispersion aqueuse de peinture pulvérulente selon la revendication 1, caractérisée en ce que le composant I comprend, dans chaque cas par rapport à I : de 50 à 95% en poids du composant A),
de 5 à 50% en poids du composant B) et
de 0 à 10% en poids du composant C),
et en ce que le composant II comprend, par rapport à la dispersion de peinture pulvérulente :
de 0,1 à 10% en poids du composant D).

3. Dispersion aqueuse de peinture pulvérulente selon l'une quelconque des revendications 1 ou 2, caractérisée en ce que le composant A) comprend des résines époxy à base de bisphénol A et/ou de bisphénol F, ayant de préférence un poids équivalent d'époxyde de 500 à 2000 g/mol (daltons), et/ou des résines époxy du type novolaque, ayant de préférence un poids équivalent d'époxyde de 500 à 1000 g/mol (daltons).

4. Dispersion aqueuse de peinture pulvérulente selon l'une quelconque des revendications 1 ou 2, caractérisée en ce que le composant A) comprend des polyacrylates renfermant des groupes époxy, qui sont préparés par copolymérisation d'au moins un monomère éthyléniquement insaturé renfermant au moins un groupe époxy dans la molécule, avec au moins un autre monomère ne renfermant pas de groupe époxy dans la molécule, au moins l'un des monomères étant un ester de l'acide acrylique et/ou méthacrylique.

5. Dispersion aqueuse de peinture pulvérulente selon l'une quelconque des revendications 1 à 4, caractérisée en ce que le composant B) comprend des acides dicarboxyliques et/ou polycarboxyliques aromatiques ayant au moins un groupe organosilyle dans la molécule.

6. Dispersion aqueuse de peinture pulvérulente selon l'une quelconque des revendications 1 à 5, caractérisée en ce que le composant D) est un épaississant non ionique à base de polyuréthane, de polyacrylate, et/ou de cellulose modifiée.

7. Procédé de préparation de dispersions aqueuses de peintures pulvérulentes selon l'une quelconque des revendications 1 à 6, caractérisé en ce que la dispersion de peinture pulvérulente préparée à partir des composants I et II est ajustée à une viscosité de 10 à 1000 mPas, de préférence de 50 à 300 mPas, à un gradient de cisaillement de 500 s⁻¹, et à une teneur en matières solides de 10 à 50%, de préférence de 20 à 40%.

8. Procédé de préparation de dispersions aqueuses de peintures pulvérulentes selon la revendication 7, caractérisé en ce que la dispersion de peinture pulvérulente préparée à partir des composants I et II est broyée en maintenant une température de 0 à 60 degrés C, de préférence de 5 à 35 degrés C.

9. Procédé de préparation de dispersions aqueuses de peintures pulvérulentes selon l'une quelconque des revendications 7 ou 8, caractérisé en ce que la dispersion de peinture pulvérulente préparée à partir des composants I et II est ajustée à un pH de 4 à 10, de préférence de 5 à 9.

10. Procédé de préparation de dispersions aqueuses de peintures pulvérulentes selon l'une quelconque des revendications 7 à 9, caractérisé en ce que la taille de particule moyenne des particules en dispersion est ajustée à 20 micromètres au plus, de préférence à 2-12 micromètres.

11. Utilisation des dispersions aqueuses de peintures pulvérulentes selon l'une quelconque des revendications 1 à 10 sous forme d'une couche transparente en tant que revêtement de couches de fond, de préférence dans l'industrie automobile.

12. Utilisation des dispersions aqueuses de peintures pulvérulentes selon l'une quelconque des revendications 1 à 10, en tant que compositions de revêtement pour des contenants d'emballage qui peuvent être constitués des matériaux les plus divers et qui peuvent présenter les formes et tailles les plus diverses.
